# EUROPÄISCHE PATENTSCHRIFT

(11) **EP 0 466 052 B1**
(45) Veröffentlichungstag und Bekanntmachung des Hinweises auf die Patenterteilung: **12.06.1996**
(21) Anmeldenummer: 91111243.1
(22) Anmeldetag: 05.07.1991
(51) Int. Cl.: G21C 9/00, G21C 15/18

(54) **Verfahren zur Minimierung der Störfall-Gefahr**
Method for reducing accident hazards
Procédé de réduction des risques en cas d'accident

(30) Priorität: 06.07.1990 DE 4021612
(43) Veröffentlichungstag der Anmeldung: 15.01.1992
(73) Patentinhaber: Jahn, Hermann, Dr., D-80807 München (DE)
(72) Erfinder: Jahn, Hermann, Dr., D-80807 München (DE)
(74) Vertreter: Dipl.-Phys.Dr. Manitz Dipl.-Ing. Finsterwald Dipl.-Ing. Grämkow Dipl.Chem.Dr. Heyn Dipl.Phys. Rotermund Morgan, B.Sc.(Phys.)

(56) Entgegenhaltungen:
- EP-A- 0 019 907
- EP-A- 0 056 830
- EP-A- 0 070 037
- DE-A- 2 633 113
- PATENT ABSTRACTS OF JAPAN vol. 13, no. 370 (P-920)(3718) 17. August 1989 & JP-A-1 126 596 (TOSHIBA) 18. Mai 1989

## Beschreibung

Die Erfindung betrifft ein sogenanntes Nachinertisierungsverfahren nach dem Oberbegriff des Anspruches 1 sowie eine Vorrichtung zur Durchführung des Verfahrens nach dem Oberbegriff des Anspruches 27. Bei einem Nachinertisierungsverfahren handelt es sich um eine Sicherheitsmaßnahme, die erst in einem hoffentlich nie eintretenden schweren Störfall mit Kühlmittelverlust und starker Überhitzung des Kernes eines Kernkraftwerkes mit Leichtwasser-Reaktor zum Tragen kommt, aber eben für diesen Fall vorgehalten werden muß, wenn schlimmste Folgen verhindert werden sollen. Die Oberbegriffe von den Ansprüchen 1 und 27 berücksichtigen den Stand der Technik nach der EP-A-0 056 830.

Die Situation im Störfall ist im folgenden beispielhaft erläutert:

Bei sogenannten schweren Störfällen mit Kernüberhitzung, wie etwa dem im amerikanischen Kernkraftwerk Three Mile Island 2 (Harrisburg), kommt es zu einer chemischen Reaktion des Hüllrohrmaterials der Brennstäbe (meist Zirkon) mit dem noch im Reaktordruckbehälter (kurz RDB genannt) verbliebenen Wasser (Dampf). Dabei werden in kurzer Zeit große Mengen Wasserstoff gebildet und schließlich in den Sicherheitsbehälter (kurz SB genannt) freigesetzt, wo er mit der dort vorhandenen Luft in Form einer Explosion oder gar Detonation verbrennen kann. Aus diesem Grunde werden manche Kernkraftwerke (bestimmte (SB-Typen) betrieblich inertisiert, d.h. bei Aufnahme des Leistungsbetriebes die Luft zum größten Teil durch Stickstoff ersetzt.

Im Gegensatz zu diesem Verfahren, das den Nachteil besitzt, daß der SB dann nicht mehr begehbar ist - und das deshalb bei vielen Kernkraftwerken ausscheidet - soll das patentgemäße Verfahren erst im Störfall und nur dann wirksam werden. Außerdem soll es die Möglichkeit eröffnen, das Wasserstoffproblem bereits an seiner Wurzel, der Entstehung, zu bekämpfen.

Bei schweren Störfällen, bei denen der Kern teilweise oder vollständig zu schmelzendroht, stellt nicht nur die explosionsartige Verbrennung des Wasserstoffs im SB, sondern bereits seine Entstehung im RDB eine ernste Gefahr dar. Die Reaktion des heißen Hüllrohrmaterials mit Wasser ist nämlich stark exotherm, d.h. einmal ausgelöst beschleunigt sie sich und die Aufheizung. In besonders ungünstigen Fällen kann der Kern vollständig schmelzen und der dann ebenfalls stark aufgeheizte RDB den Belastungen nicht mehr standhalten. Geschieht dies gar unter noch hohem Systemdruck, so wird das Versagen des RDB von katastrophaler Wirkung sein und auch so den SB gefährden, der ansonsten nur der Gefahr einer Wasserstoffexplosion oder -detonation ausgesetzt wäre.

Diese Szenarien sind bekannt und z.B. in der "Deutschen Risikostudie, Phase B, für deutsche Kernkraftwerke" benannt. Diese Studie, die sicherlich den derzeitigen Stand von Wissenschaft und Technik repräsentiert, gelangt allerdings noch zu dem Schluß, daß die Entstehung von Wasserstoff bei Kernüberhitzung nicht beeinflußt werden könne, sondern dann nur die Wasserstoffverbrennung.

Aufgabe der vorliegenden Erfindung ist es eine Lehre vorzusehen, wie in einem solchen Störfall sowohl auf die Entstehung des Wasserstoffs als auch auf dessen heftige Verbrennung gefahrmindernd eingewirkt werden kann. Die Erfindung soll in verschiedenen Weiterbildungen gleichzeitig den entgegengehaltenen Gefahren Rechnung tragen und Lösungswege zeigen, diese Gefahren wirksam zu verhindern.

Zur Lösung dieser Aufgaben wird erfindungsgemäß verfahrensmäßig vorgeschlagen, daß eine chemische reaktionshemmende Substanz in flüssiger Form in den Kernbereich und/oder in den Bereich des Sumpfes, in dem sich das ausgetretene Kühlmittel sammelt, eingespeist wird und dabei die im Kernbereich und/oder im Sumpf enthaltene Wärme zur Verdampfung der Substanz verwendet wird. Vorrichtungsmäßig zeichnet sich die Erfindung durch einen im Bereich des Kernreaktors angeordneten bzw. einbringbaren Behälter zur Lagerung einer chemischen reaktionshemmenden verdampfungsfähigen Substanz in flüssiger Form sowie durch Leitungseinrichtungen und/oder mindestens eine Ventileinrichtung zur Einbringung der Substanz in den Bereich der Brennstäbe und/oder in den Sumpf aus.

Das Verfahren verwendet daher ein chemisches reaktionshemmendes Mittel, das in flüssiger Form bereitgestellt wird, und es verwendet die im Kernkraftwerk im Störfall vorhandene bzw. auftretende Wärme (Nachzerfallsleistung, Speicherwärme, Reaktionsenergie) zur Verdampfung der reaktionshemmenden Substanz im Kernkraftwerk - d.h. innerhalb des Reaktordruckbehälters, der den Kern umgibt, oder des Sicherheitsbehälters, der den gesamten Reaktor einschließt.

Die eingangs genannte EP-A-0 056 830 offenbart zwar ein Verfahren zum Vermeiden oder Verringern einer Gefährdung einer Kernkraftanlage, wobei gemäß Anspruch 7 der EP-A-0 056 830 eine reaktionshemmende Substanz in flüssiger Form in den Sicherheitsbehälter eingebracht werden soll.

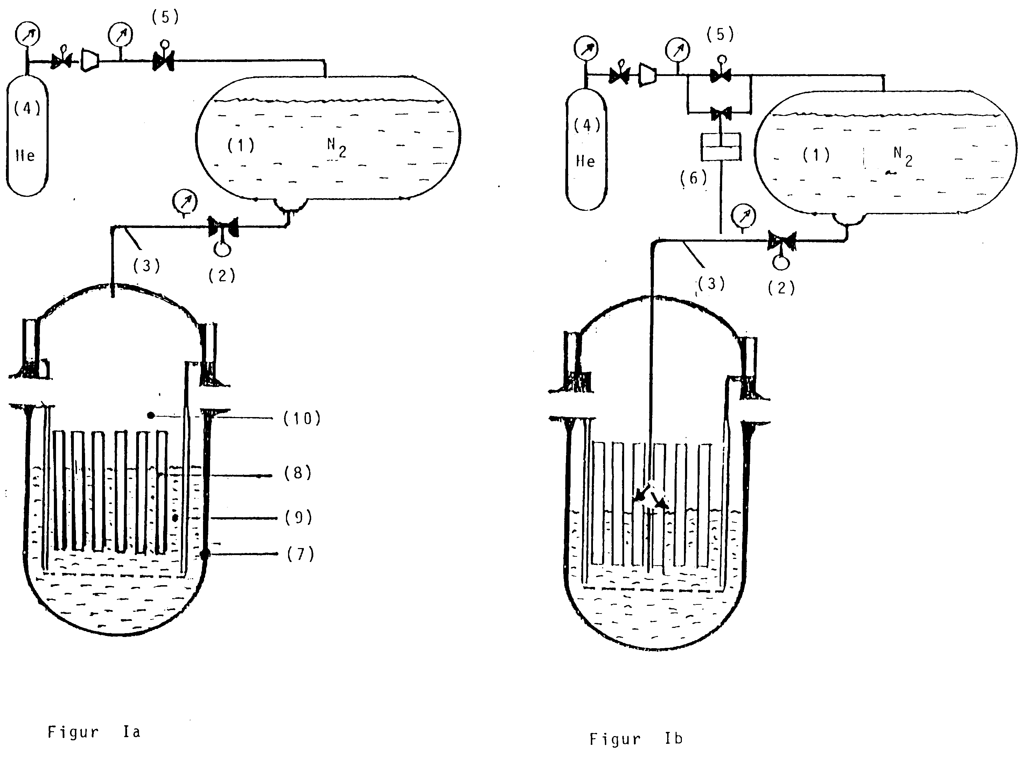

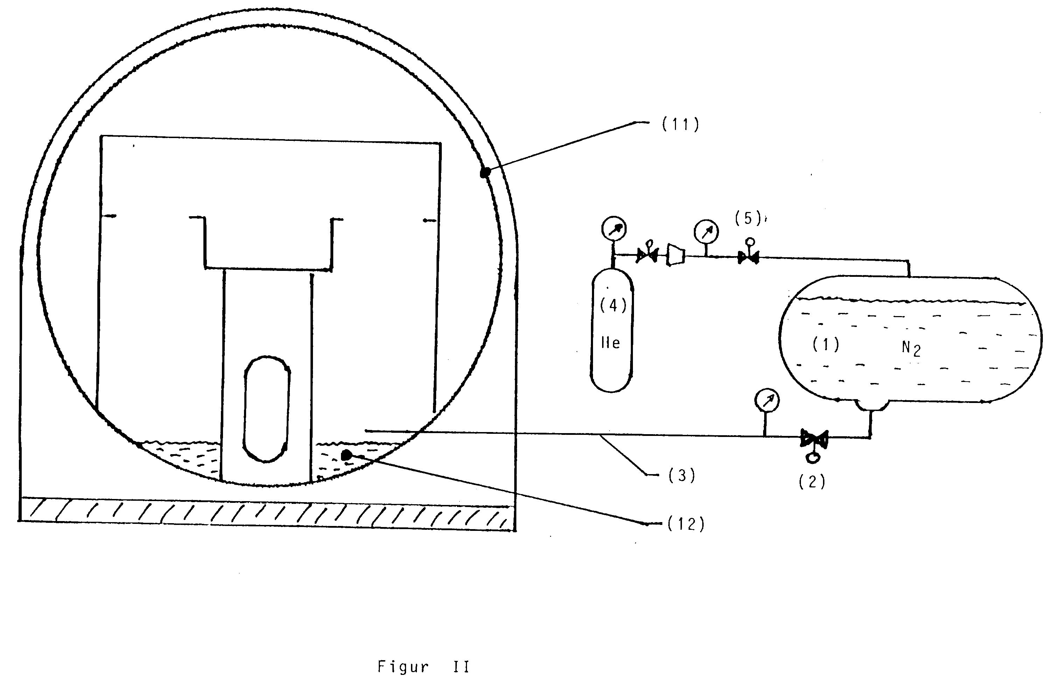

Diese als nächstliegender Stand der Technik erkannte Entgegenhaltung gibt jedoch keinerlei Auskunft darüber, daß die im Sumpf (Kühlmittel) enthaltene Wärme zur Verdampfung des flüssigen Inertgases herangezogen werden könnte. Daher ist in Fig. 3 dieser Schrift auch kein Kühlmittelsumpf eingezeichnet und es wird zum Ausdruck gebracht, daß Gas am Auslaß der Verbindungsleitung in den Sicherheitsbehälter strömt. Dies entspricht dem seinerzeitigen Stand von Wissenschaft und Technik, der im Abschlußbericht "Möglichkeiten zur Wasserstoffbeseitigung Phase II: Wasserstoffbeherrschung bei hypothetischen schweren Unfällen in Druckwasserreaktoren" aus der Schriftenreihe "Reaktorsicherheit und Strahlenschutz", veröffentlicht vom Deutschen Bundesminister des Inneren, im Januar 1984 unter der Ni BMI - 1984 - 027, dokumentiert ist. Danach war stets nur daran gedacht, flüssiges Gas über ein entsprechend verzweigtes Rohrleitungsnetz in die Atmosphäre des Sicherheitsbehälters einzusprühen, wobei im Falle der Verwendung von N2 erst noch spezielle Verdampfer zu entwickeln wären. Dies bedeutet, daß zu diesem Zeitpunkt die Fachwelt, und zwar nicht ein einziger Fachmann, sonder die Fachleute, die weltweit angesprochen waren, der Meinung waren, daß zusätzliche Verdampfer notwendig sind.

Der Verwirklichung des Verfahrens der EP-A-0 056 830 wurde in Fachkreisen stets entgegengehalten, daß die für die Verdampfung des flüssigen Inertgases benötigte Energie in einem Störfall nicht vorhanden sei, so daß sich das Verfahren nicht verwirklichen ließe. Aus dem Siemens-Arbeitsbericht KWU: E 443/91/0046 vom 21.11.91 mit der Bezeichnung "Bewertung von Inertisierungsmaßnahmen zur H₂-Beherrschung" geht hervor, daß die einzige realistische Konzeption dieser Art die einer flüssigen CO₂-Einspeisung mit einem im ganzen

Sicherheitsbehälter (als RSB, SB oder Containment bezeichnet) verzweigten Rohrleitungsnehtz sei. Dieser Bericht macht klar, daß die Verdampfungswärme selbst nach der Vorstellung von 1991 von der Atmosphäre und den Strukturen im Sicherheitsbehälter zu liefern sein wird - die Möglichkeit der Sumpfwärmenutzung, lehnt diese aber kurzerhand als nicht empfehlenswert ab.

Die folgende Beschreibung ist dem Problem entsprechend in zwei Abschnitte gefaßt, die beispielhaft die Lösungsvorschläge gemäß der Erfindung aufzeigen:

### I. Minimierung der Entstehung des Wasserstoffs-Inertisierung des Reaktordruckbehälters (RDB)

Das Verfahren gemäß der Erfindung, bei dem zur Verhinderung oder Minimierung der chemischen Reaktion des Hüllrohrmaterials mit dem Kühlmittel (Wasser) eine flüssige Substanz, z.B. Stickstoff, in den Bereich des überhitzten Kerns eingebracht und dort verdampft wird, wird im folgenden in beispielhafter Weise unter Bezugnahme auf Figur I a und I b beschrieben, in denen ein Reaktordruckbehälter und erfindungsgemäße Einrichtungen für das Verfahren zur Inertisierung im Störfall schematisch dargestellt sind. Es handelt sich im Beispiel um einen Druckwasser-Reaktor, die Überlegungen gelten jedoch sinngemäß ebenso für einen Siedewasser-Reaktor.

In der Figur I a (und Ib) sind bezeichnet mit:
(1) Tank für die Flüssiggasvorhaltung (z.B. Stickstoff)
(2) Regel- bzw. Absperrventil, das als Handarmatur ausgeführt sein kann
(3) Einspeiseleitung für das Flüssiggas
(4) Treibgasbehälter, z.B. komprimiertes Helium, das jedoch gegebenenfalls auch einem vorhandenen Schutzgassystem entnommen oder auch erst im Störfall bereitgestellt werden kann (Flaschenlager, Ausbaustück etc.)
(5) Absperr- und/oder Regelventil für die Treibgaszufuhr, das wiederum als Handarmatur ausgeführt sein kann
(6) Druckgesteuerte Betätigung des Ventils (5)
(7) Reaktordruckbehälter, RDB
(8) Reaktorkern mit den Brennelementen
(9) Verbliebenes Kühlmittel im Störfall
(10) Gasvolumen bei Ausdampfen im Störfall

Tritt im Verlaufe eines Störfalles ein Zustand auf, bei dem der Reaktordruckbehälter nicht mehr völlig mit Wasser gefüllt ist, so wird der Kern (7) überhitzt, und Hüllrohre seiner Brennelemente reagieren mit dem Wasserdampf. Dabei wird die stark exotherme Reaktion nur durch die entstehende Oxydschicht gebremst, die jedoch spröde ist, daher leicht abplatzt und somit wiederholt "frische" metallische Oberflächen der Reaktion aussetzt. Der Grundgedanke der vorliegenden Erfindung besteht nun darin, flüssiges Schutzgas, zum Beispiel Stickstoff, aus dem Vorratsbehälter (1) über die Einspeiseleitung (3) in den Reaktordruckbehälter (6) einzubringen und dort mittels der im Kühlmittel und den Brennelementen enthaltenen Energie zu verdampfen. Dabei ist es grundsätzlich unerheblich, ob die Leitung, wie in Figur I ab und I b gezeigt, von oben oder an einer anderen Stelle den zum Beispiel Stickstoff in den RDB gelangen läßt und ob dieser möglicherweise zum Teil bereits auf seinem Weg dorthin verdampft (erste Phase der Einspeisung). Spätestens wenn flüssiger zum Beispiel Stickstoff in das heiße Kühlmittel gelangt oder auf heiße Strukturen (8), (9) trifft, wird er verdampfen und somit die Reaktion des heißen Metalles, zum Beispiel Zirkons, mit dem Wasser mindern: Der flüssige zum Beispiel Stickstoff wird sich bei Eindringen in das verbliebene Kühlmittel (9) mit einem Gasmantel umgeben, das heißt selbst bei Einspeisung unten im RDB nicht am Boden "liegen" bleiben, da er mit seinem Gasmantel einen Auftrieb erfährt. Dies gilt insbesondere dann, wenn er sich in Form kleiner Tropfen im Kühlmittel verteilt, was durch die im siedenden Kühlmittel vorhandenen Turbulenzen ohnedies zu erwarten ist, jedoch konstruktiv noch unterstützt werden kann. In jedem Falle wird aufgrund des starken Überangebots an Wärme der Stickstoff rasch verdampfen. Der gasförmige zum Beispiel Stickstoff sammelt sich im Volumen über dem Wasserspiegel (10) an und behindert dort zunehmend die Reaktion des Wasserdampfes, der nun nicht nur aus dieser gefährlich heißen Zone verdrängt wird (zumindest zum Teil), sondern zudem durch den zum Beispiel Stickstoff hindurchdiffundieren muß, um an der Struktur-Oberfläche reagieren zu können. Die Reaktion wird also auf zweifache Weise in ihrem Ausmaß gemindert. Hinzu kommt, daß das Verdampfen des Stickstoffs, das erwartungsgemäß vor allem in der Nähe des Wasserspiegels stattfinden wird, die Strukturen kühlt und die Hüllrohre durch die verminderte Reaktion nicht mehr so rasch und stark aufgeheizt werden.

In einer vorteilhaften Weiterbildung der Erfindung kann die Einspeiseleitung, wie in Figur I b gezeigt, durch den Kern hindurchgeführt und an ihrem Ende verschlossen werden. Wird dieses Rohr durch geeignete Wahl seines Materials und seiner Wandstärke so gestaltet, daß es bei starker Kernaufheizung versagt, ehe eine starke Zirkonreaktion einsetzt, so sind damit zwei Vorteile verbunden:

Erstens kann es zu keiner Fehlauslösung der Einspeisung kommen, wohl aber wird eine passive und damit zuverlässige Aktivierung der Einspeisung im Störfall erreicht.

Zweitens wird der zum Beispiel Stickstoff automatisch zuerst in dem Bereich freigesetzt, in dem die Reaktion ansonsten zuerst anlaufen würde.

Der Reaktorkern ist nämlich von Haus aus nicht gleichförmig heiß. Bei Absinken des Kühlmittelspiegels im Störfall wird es also, wie in Figur I b angedeutet, zu einem Bereich kommen, der als erster besonders heiß wird. Ein dort vorhandenes Einspeiserohr wird also genau in der richtigen Höhe versagen und durch den austretenden zum Beispiel Stickstoff die Reaktion möglicherweise noch im Ansatz ersticken oder zumindest deutlich mindern. Um diesen Vorteil besonders zu nutzen, kann diese Art der passiv ausgelösten Einspeisung in vorteilhafter Weiterbildung der Erfindung auch über mehrere Rohre erfolgen.

Die Einspeisung und Regelung der in den RDB eingebrachten Menge flüssigen zum Beispiel Stickstoffs kann über ein Regelventil (2) und/oder mittels dem in Figur I a in vorteilhafter Weiterbildung gezeigten Ventil (5) durch Regelung des zur Förderung in den RDB aufgeprägten Druckes mittels zum Beispiel Helium (4) erfolgen. Dies kann mit üblichen Armaturen wie Reduzierventil, Manometer etc. in der Leitung zwischen (1) und (4) geschehen und gegebenenfalls durch ein Durchflußmeßgerät zwischen (1) und (3) kontrolliert werden (die, da üblich, nur angedeutet und nicht näher ausgeführt sind).

In vorteilhafter Weiterbildung der Erfindung gemäß der in Figur I b gezeigten Ausführung ist das patentgemäße Verfahren nicht nur geeignet, sich selbst hinsichtlich seines korrekten Zustandes ("Stand By" / Dichtheit) im Normalbetrieb auszuweisen, sondern zudem auch den Eintritt des Ernstfalles (starke Kernüberhitzung) anzuzeigen und sich dann in einer weiteren vorteilhaften Weiterbildung sogar selbst in den aktiven Zustand der Einspeisung zu überführen:

Erfindungsgemäß wird das in Figur I a bzw. I b gezeigte System zweckmäßigerweise auf zumindest den Druck des Reaktorkühlsystems ausgelegt, mit dem es im Anforderungsfall verbunden ist. Deshalb kann bei Inbetriebnahme des Leistungsbetriebes des Reaktors wie folgt verfahren werden: Zunächst wird das System durch Öffnen des Ventiles (5) (und (2), falls vorhanden) auf den Druck des Kühlsystems (Primärkreisdruck) bzw. etwas höheren Druck gebracht (Bezug: Figur I b). Nachdem sich stationäre Verhältnisse des in dieser Ausführung an seinem Ende ja noch verschlossenen Systems eingestellt haben, wird das Ventil (5) geschlossen. Das Flüssiggas (1) wird nun nicht nur unter Druck gelagert, sondern im Normalbetrieb zweckmäßigerweise auch auf etwa konstanter Temperatur gehalten. Der Druck im Einspeisesystem muß dann also auch bei geschlossenem Ventil (5) erhalten bleiben (geringe Leckagen sind durch gelegentliches, kurzzeitiges Öffnen von (5) auszugleichen).

Das System ist nun aktiviert, das heißt es würde bei dem beabsichtigten Versagen der Einspeiseleitung im Störfall mit starker Kernüberhitzung diese anzeigen und bereits eine gewisse Einspeisung freigeben. Dabei aber würde der Druck in der Einspeiseleitung auf den Primärkreisdruck abfallen. Dies kann nun nicht nur zur Auslösung eines entsprechenden Notsignales und der Einleitung von Maßnahmen genutzt werden, sondern in einer weiteren vorteilhaften Weiterbildung der Erfindung auch dazu verwendet werden, ein automatisches Absperr- / Regelventil (6) zu öffnen. Dies kann nach bekannten Verfahren (vergleiche zum Beispiel Bremskraftverstärker) als ebenfalls passive Sicherheitseinrichtung ausgeführt werden (ohne Bedarf von elektrischer Energie). Der erfindungsgemäße Gedanke liegt dabei nicht in der konstruktiven Ausführung der Steuer- und Regeleinrichtung (6), sondern in der Verwendung der anfallenden Druckveränderung in der Einspeiseleitung (3).

Es sei jedoch darauf hingewiesen, daß diese Einrichtung (6) nicht zwingend ist; es genügt die Kenntnisnahme des Druckabfalles, um das Ventil (5) zum Beispiel von Hand zu öffnen.

Außerdem sei ausdrücklich erwähnt, daß der Treibgasdruck nicht zwangsläufig durch ein eigens hierfür installiertes System (4), (5) bereitgestellt sein muß, sondern daß hierfür auch im Kernkraftwerk vorhandene Systeme (zum Beispiel Druckhalter, Schutzgassystem, He-Durchmischungssystem oder ähnliches) verwendet werden können (notfalls auch erst im Störfall angeschlossen). Überhaupt muß nicht zwangsläufig ein Treibgas verwendet werden, dies stellt ja nur eine vorteilhafte Weiterbildung dar; es wäre beispielsweise auch eine Förderpumpe, Dosierpumpe oder ähnliches grundsätzlich geeignet, um flüssigen zum Beispiel Stickstoff in den Reaktordruckbehälter einzubringen. Auch muß die Einspeiseleitung nicht zwangsläufig den Reaktordruckbehälter durchdringen, sondern könnte gemäß Anspruch 1 und 2 in einen anderen Bauteil einmünden, der spätestens im Störfall mit dem Reaktordruckbehälter verbunden ist. Hierzu zählen sämtliche Komponenten des Kühl- und Notkühlsystems (zum Beispiel Kühlmittelleitungen, Dampferzeuger, die sogenannten Druckspeicher, auch Akkus genannt, sowie das Hochdruckeinspeisesystem), da dann die im Kern und/oder Kühlmittel enthaltene Wärme zur Verdampfung des zum Beispiel flüssigen Stickstoffs verwendet wird und zumindest in den meisten Fällen zumindest ein Teil der reaktionshemmenden Substanz in den Bereich der Brennstäbe eingebracht würde. Der in den Reaktordruckbehälter eingebrachte zum Beispiel Stickstoff trägt auch dann zu dessen Inertisierung, das heißt zur Minderung der chemischen Reaktion, bei der Wasserstoff entsteht (Metall-Wasser-Reaktion), bei, wenn er nicht dort verdampft wird. Der nicht in den Kern gelangende Teil des im Kühlsystem verdampfenden zum Beispiel Stickstoffs würde gemäß Anspruch 1 noch immer die im Kühlmittel enthaltene Wärme zu seiner zumindest teilweisen Verdampfung verwenden. Außerdem wird der nicht im Kern verdampfende Teil des inertisierenden Mittels (wie im folgenden am Beispiel der im Reaktorsumpf erfolgenden Verdampfung ausgeführt) zur Inertisierung des Sicherheitsbehälters beitragen, die durch mindestens einen der übrigen Ansprüche erfaßt ist.

### II. Minimierung der Verbrennung des Wasserstoffs - Inertisierung des Sicherheitsbehälters (SB)

Hierzu sei zunächst klargestellt, daß ebenso wie bei der Inertisierung des RDB auch bei der Nachinertisierung des SB nicht erst das Ergebnis einer vollständigen Inertisierung, sondern bereits die Minderung der Reaktion als Erfolg im Sinne der Erfindung gilt und als Ziel gesehen wird. Im vorliegenden Fall heißt dies, daß mit Hilfe des erfindungsgemäßen Verfahrens die chemische Reaktion des Wasserstoffs mit dem Sauerstoff der Atmosphäre wenn möglich verhindert und, wo dies nicht möglich ist, doch zumindest eine mildere Verbrennungsform erreicht werden soll. Es ist bekannt, daß es hierzu andere Erfindungen gibt, die sich der Frage widmen, wie dies möglichst schnell oder mit möglichst wenig Inertgas erreicht werden kann (Patent Nr. EP 0 056 830 und Patent Nr. EP 0 070 037). Die vorliegende Erfindung widmet sich sozusagen in diesem Punkt in Ergänzung der Frage, wie die erforderliche Menge Inertgas in gasförmigem Zustand im SB bereitgestellt, "erzeugt" werden kann.

Die Trennung der Beschreibung in die Abschnitte I. und II. ist sicherlich sinnvoll, weil verschiedene Teile der Anlage angesprochen werden und die unter I. beschriebene Maßnahme auch ein eigenes primäres Ziel hat. Dennoch sollte aber gesehen werden, daß auch hier keine strikte Trennung möglich ist (auch nicht erforderlich), da der im RDB verdampfte zum Beispiel Stickstoff schließlich in den SB gelangt und auch gelangen soll. Bei einem schweren Störfall wird nicht zu erwarten sein, daß durch die unter I. beschriebene Sicherheitsvorkehrung die Entstehung des Wasserstoffes vollständig unterbunden werden kann. Immerhin kommt dieser dann jedoch in vorteilhafter Weise zumindest nicht allein, sondern in Mischung mit dem inertisierenden Medium in den SB. Der unter I. beschriebene Teil wirkt also zugleich auch im Sinne der hier behandelten Minimierung einer heftigen Wasserstoffverbrennung im SB.

In Ergänzung oder auch als eigenständige Alternative zu I. kann der flüssige zum Beispiel Stickstoff jedoch auch im SB verdampft werden, wie in Figur II gezeigt, nämlich im Bereich des sogenannten "Sumpfes", dem unteren Bereich des SB, in dem sich das ausgetretene Kühlmittel sammelt. Der Vorgang gang ist dabei physikalisch ähnlich, und es kann auch weitgehend auf die bereits beschriebenen Komponenten (1) bis (5) zurückgegriffen werden, auf die im folgenden ohne erneute Beschreibung Bezug genommen wird.

Zusätzlich werden hier noch folgende Bezugszahlen eingeführt:
(11) Sicherheitsbehälter, SB
(12) Kühlmittelsumpf

Zwar können sich in der technischen Ausführung gewisse Unterschiede ergeben, da der Sicherheitsbehälter nur auf einen Druck von 0.5 Mpas (5 bar) ausgelegt ist, so daß das hier vorzusehende Einspeisesystem ebenfalls nur auf einen deutlich geringeren Druck ausgelegt werden muß, als dies bei Einspeisung in den RDB der Fall ist. Dies sind jedoch Einzelheiten, die für die Erfindung nicht erheblich sind, da diese in erster Linie das Verfahren betrifft, wie im Störfall der flüssige zum Beispiel Stickstoff ohne Fremdenergie verdampft werden kann. Einrichtungen wie die automatische Steuerungseinrichtung (6), die hier mit einem anderen Druckverlauf im Störfall konfrontiert wird, sich aber dennoch die Tatsache zunutze machen kann, daß gemäß vorteilhafter Weiterbildung der Erfindung die Veränderung des Druckes gegenüber dem Normalbetrieb dazu verwendet wird, ein Einspeise-Steuerventil zu betätigen, stellen bevorzugte Vorrichtungen zur Durchführung der Erfindung dar. Eine solche automatische Steuereinrichtung stellt daher eine vorteilhafte Weiterbildung dar. Außerdem kann, wenn das System nach I. bereits vorhanden ist, die dort vorhandene Steuereinrichtung gegebenenfalls mit Verwendung finden (oder in der dort beschriebenen Form mit anderen Ansprechkriterien). Soll eine automatische Steuereinrichtung nur für den Einsatz und die Bedingungen im SB realisiert werden, so gilt, daß der Außendruck (hier der der Atmosphäre des SB) zunächst bei etwa 0.1 Mpas (1 bar) liegt und im Verlauf des Störfalles ansteigt (auf etwa 0.5 Mpas). Wird dieses in Figur II gezeigte System also als eigenständiges oder einziges eingesetzt, so wird man möglicherweise diesen Druckanstieg oder auch den dadurch ausgelösten SB-Abschluß (Schließen von Durchdringungen) zur Aktivierung (Öffnen) des Ventiles (5) und/oder (6) verwenden.

Die Einspeiseleitung (3) führt in diesem Anwendungsfall, wie in Figur II schematisch dargestellt, in den Sumpf oder zumindest in dessen Nähe. Die bei Aktivierung der Einspeisung ablaufenden Vorgänge zur Verdampfung im Kühlmittel sind analog zu den unter I. beschriebenen. Zur Unterstützung der raschen Verdampfung kann das Einspeiserohr auch im Bereich des Sumpfes (12) als Schlange oder andersartiger Wärmetauscher ausgeführt sein. Wird das Verfahren als eigenständiges System gestaltet, so kann es auch auf niedrigerem Druck (als in I.) betrieben werden. Besonders in diesem Falle kann der Verschluß im Normalbetriebszustand mit zum Beispiel einer Hülse oder Kappe derart erfolgen, daß er bei Aktivierung des Systems zum Beispiel mit Hilfe des durch das Treibgas aufgebrachten Druckes entfernt werden kann. Dies kann über die angesprochene Automatik (6) oder von Hand durch Betätigung des Ventiles (5) geschehen. Die Überwachung des Dichtzustandes im Normalbetrieb des Kernkraftwerkes kann wie unter I. Beschrieben erfolgen: Man gibt auf die Einspeiseleitung einen gewissen (hier allerdings nicht notwendig hohen) Druck und überwacht dessen Verlauf bei geschlossenem Ventil (5), das im Normalbetrieb vom Schutzsystem des Reaktors in Geschlozsenstellung verriegelt sein kann, so daß eine Fehlauslösung mit Personengefährdung mit Sicherheit ausscheidet. Eine Gefährdung des SB oder anderer Komponenten durch Versprödung bei direktem Kontakt mit flüssigem zum Beispiel Stickstoff wird dann ebenfalls ausgeschlossen, wenn das System erst beim Störfall, das heißt bei Vorhandensein von Kühlmittel im Sumpf, einspeisen kann. Unterstützend und in vorteilhafter Weiterbildung der Erfindung kann die Einspeisung ausreichend fein verteilt (Tröpfchen) und vorzugsweise in der Nähe der Oberfläche erfolgen.

## Patentansprüche

1. Verfahren zur Minimierung der Gefahr einer chemischen Reaktion des bei einem Störfall mit Kernüberhitzung entstehenden Wasserstoffs, durch gekennzeichnet, daß eine chemische reaktionshemmende Substanz (1) in flüssiger Form in den Kernbereich (8) und/oder in den Bereich des Sumpfes (12), in dem sich das ausgetretene Kühlmittel sammelt, eingespeist wird und dabei die im Kernbereich und/oder im Sumpf enthaltene Wärme zur Verdampfung der Substanz verwendet wird.

2. Verfahren nach Anspruch 1, dadurch gekennzeichnet, daß die reaktionshemmende Substanz (1) in den Bereich der Brennstäbe eingebracht wird.

3. Verfahren nach Anspruch 1, dadurch gekennzeichnet, daß die reaktionshemmende Substanz (1) in den beim Unfall mit Kühlmittel gefluteten Bereich eingebracht wird.

4. Verfahren nach mindestens einem der Ansprüche 1 bis 3, dadurch gekennzeichnet, daß das die chemische Reaktion hemmende Mittel (1) in flüssiger Form über eine oder mehrere Leitungen (3) dem Bereich zugeführt wird, in dem es verdampfen soll.

5. Verfahren nach mindestens einem der Ansprüche 1 bis 4, dadurch gekennzeichnet, daß das Einbringen der reaktionshemmenden Substanz (1) in den gewünschten Bereich mittels Aufprägen eines Treibgasdruckes (4) auf das Einspeisesystem ((1, 2, 3, 5); (1, 2, 3, 5, 6)) erfolgt.

6. Verfahren nach mindestens einem der Ansprüche 1 bis 5, dadurch gekennzeichnet, daß als Treibgas (4) insbesondere ein komprimiertes, nicht kondensiertes Gas verwendet wird, dessen Druck auf die Oberfläche der flüssig gelagerten reaktionshemmenden Substanz (1) aufgebracht wird.

7. Verfahren nach mindestens einem der Ansprüche 5 oder 6, dadurch gekennzeichnet, daß der Treibgasdruck verwendet wird, um die Einspeiserate des flüssigen reaktionshemmenden Mittels zu steuern.

8. Verfahren nach mindestens einem der Ansprüche 1 bis 6, dadurch gekennzeichnet, daß zur Steuerung der Einspeisung ein Regelventil (2) zwischen Vorratsbehälter (1) und Einspeisestelle des reaktionshemmenden Mittels verwendet wird.

9. Verfahren nach mindestens einem der Ansprüche 1 bis 8, dadurch gekennzeichnet, daß das Einspeisesystem ((1, 2, 3, 5); (1, 2, 3, 5, 6)) im Normalbetrieb des Kernkraftwerkes durch ein sogenanntes Ausbaustück unterbrochen wird, das erst im Anforderungsfall eingesetzt wird.

10. Verfahren nach mindestens einem der Ansprüche 1 bis 8, dadurch gekennzeichnet, daß die Einspeiseleitung (3) im Normalbetrieb des Kernkraftwerkes an ihrem den Kernbereich (8) bzw. dem Sumpf (12) zugeordneten Ende verschlossen ist, um das Einspeisesystem ((1, 2, 3, 5); (1, 2, 3, 5, 6)) im sogenannten Stand-By-Zustand bereitzustellen.

11. Verfahren nach Anspruch 1 bis 10, dadurch gekennzeichnet, daß das die Reaktion hemmende Mittel ein Inertgas enthält.

12. Verfahren nach einem der Ansprüche 1 bis 11, dadurch gekennzeichnet, daß als das die Reaktion hemmende Mittel Stickstoff (1) verwendet wird, der flüssig gelagert bereitsteht oder bereitgestellt wird.

13. Verfahren nach einem der Ansprüche 1 bis 11, dadurch gekennzeichnet, daß als das die Reaktion hemmende Mittel flüssig gelagertes Kohlendioxid verwendet wird.

14. Verfahren nach einem der vorstehenden Ansprüche, dadurch gekennzeichnet, daß als reaktionshemmende Substanz Gemische von chemischen reaktionshemmenden Mitteln verwendet werden.

15. Verfahren nach mindestens einem der Ansprüche 5 bis 7 dadurch gekennzeichnet, daß das Treibgas (4) ein Inertgas enthält.

16. Verfahren nach einem der Ansprüche 5 bis 15, dadurch gekennzeichnet, daß als Treibgas (4) Gasgemische verwendet werden.

17. Verfahren nach Anspruch 1, 2 und 4 bis 16, dadurch gekennzeichnet, daß zumindest ein Teil der bisher zur sogenannten Entlüftung des Reaktordruckbehälters (7) vorgesehenen Leitung als Teil des Einspeisesystems verwendet wird.

18. Verfahren nach einem der Ansprüche 1, 3, 4 und 17, dadurch gekennzeichnet, daß zumindest ein Teil des zur Probenahme und/oder zur Heliumgaseinspeisung vorgesehenen Systems als Teil des Systems zur Einspeisung der flüssigen reaktionshemmenden Substanz verwendet wird.

19. Verfahren nach einem der vorhergehenden Ansprüche, dadurch gekennzeichnet, daß eine im Normalbetrieb verschlossene Einspeiseleitung (3) so ausgelegt wird, daß sie bei Einwirkung der Störfallbedingungen gezielt versagt bzw. öffnet und die Einspeisung freigibt.

20. Verfahren nach Anspruch 19, dadurch gekennzeichnet, daß der bei einem Störfall ausgelöste Innendruck des geschlossenen Einspeisesystems ((1, 2, 3, 5); (1, 2, 3, 5, 6)) zu einem gezielten Versagen des Abschlusses des Einspeisesystems und damit zur Freigabe eines gewünschten Einspeisequerschnitts führt.

21. Verfahren nach einem der Ansprüche 19 und 20, dadurch gekennzeichnet, daß als Verschluß der Einspeiseöffnung während des sogenannten Stand-By-Zustandes Abdichtungen in Form von Pfropfen, Folien, Ummantelungen, Berstscheiben oder ähnliches verwendet werden, die im Störfall durch Einwirkung von Temperatur und/oder Druck entfernt oder zerstört werden.

22. Verfahren nach einem der Ansprüche 19 bis 21, dadurch gekennzeichnet, daß zumindest ein Teil der Einspeiseleitung (3) in einem Material ausgeführt ist, das bei den im Störfall auftretenden Temperaturen dem vorhandenen oder aufgeprägten Druck nicht standhält.

23. Verfahren nach einem der vorhergehenden Ansprüche, dadurch gekennzeichnet, daß der Druckabfall in der Einspeiseleitung (3) zur Betätigung der Absperr- und/oder Regelarmatur (2, 5) verwendet wird.

24. Verfahren nach einem der vorhergehenden Ansprüche, dadurch gekennzeichnet, daß die Ausströmöffnung so angeordnet und gestaltet wird, daß das die Reaktion hemmende Mittel in seiner flüssigen Phase in Tropfen verteilt im Kühlmittel auftritt.

25. Verfahren nach einem der vorhergehenden Ansprüche, dadurch gekennzeichnet, daß die Ausströmöffnung für die reaktionshemmende Substanz als Düse, d.h. als Lochrohr-, Verteiler- oder Sprühdüse gestaltet wird.

26. Vorrichtung zur Minimierung der Gefahr einer chemischen Reaktion des bei einem Störfall mit Kernüberhitzung im Reaktor entstehenden Wasserstoffs, insbesondere zur Durchführung des Verfahrens nach einem der vorhergehenden Ansprüche 1 bis 26, gekennzeichnet durch einen im Bereich des Kernreaktors angeordneten bzw. einbringbaren Behälter (1) zur Lagerung einer chemischen reaktionshemmenden verdampfungsfähigen Substanz in flüssiger Form sowie durch Leitungseinrichtungen (3) und/oder mindestens eine Ventileinrichtung (2, 5) zur Einbringung der Substanz in den Bereich der Brennstäbe und/oder in den Sumpf.

27. Vorrichtung nach Anspruch 26, dadurch gekennzeichnet, daß eine Einrichtung (6) vorhanden ist, welche bei einem Störfall die Einleitung der chemischen reaktionshemmenden Substanz (1) in den Kern (8) und/oder den Sumpf (12) automatisch verursacht.

28. Vorrichtung nach Anspruch 26 bzw. Anspruch 27, dadurch gekennzeichnet, daß eine Einrichtung zum manuellen Anschluß des die chemische Substanz enthaltenden Behälters (1) an eine im Kern (8) und/oder im Sumpf (12) mündende Leitung (3) vorgesehen ist.

29. Vorrichtung nach einem der vorhergehenden Ansprüche 26 bis 28, dadurch gekennzeichnet, daß ein Treibmittelbehälter (4) vorgesehen ist, der an den die reaktionshemmende Substanz lagernden Behälter (1) angeschlossen bzw. anschließbar ist, um diese bei einem Störfall in den Kernbereich (8) bzw. den Sumpf (12) zu drücken.

30. Vorrichtung nach einem der vorhergehenden Ansprüche 26 bis 28, dadurch gekennzeichnet, daß die die reaktionshemmende Substanz (1) in den Kernbereich (8) bzw. Sumpf (12) einleitende Leitung (3) mit Öffnungen zur verteilten Einleitung dieser Substanz vorgesehen ist.

31. Vorrichtung nach einem der vorhergehenden Ansprüche 26 bis 30, dadurch gekennzeichnet, daß die Leitung (3) zur Einleitung der reaktionshemmenden Substanz (1) in einem Bauteil des Reaktors mündet, der spätestens im Störfall mit dem Reaktordruckbehälter verbunden ist, beispielsweise in eine Kühlmittel leitung, in einen Dampferzeuger, in den Druckspeicher oder in das Hochdruckeinspeisesystem.

32. Vorrichtung nach Anspruch 26, dadurch gekennzeichnet, daß eine Förderpumpe zur Einleitung der reaktionshemmenden Substanz (1) in den Kernbereich (8) bzw. in den Sumpf (12) vorgesehen ist.

## Claims

1. A method of minimizing the danger of a chemical reaction of the hydrogen which arises during a reactor incident with overheating of the core,
characterized in that
a chemical reaction inhibiting substance in liquid form is fed into the core region (8) and/or into the region of the sump (12) in which the escaped coolant collects and the heat contained in the core region and/or in the sump is used for the vaporization of the substance.

2. Method in accordance with claim 1,
characterized in that
the reaction inhibiting substance (1) is introduced into the region of the fuel rods.

3. Method in accordance with claim 1,
characterized in that
the reaction inhibiting substance (1) is introduced into the region flooded with coolant during an accident.

4. Method in accordance with at least one of the claims 1 to 3,
characterized in that
the means (1) which inhibits the chemical reaction is supplied in liquid form to the region in which it is to vaporize via one or more conduits (3).

5. Method in accordance with at least one of the claims 1 to 4,
characterized in that
the introduction of the reaction inhibiting substance (1) into the desired region takes place by applying a drive gas pressure (4) to the infeed system ((1,2,3,5); (1,2,3,5,6)).

6. Method in accordance with at least one of the claims 1 to 5,
characterized in that
a compressed non-condensed gas is used as a drive gas (4) the pressure of which is applied to the surface of the reaction inhibiting substance (1) which is stored in liquid form.

7. Method in accordance with at least one of the claims 5 or 6,
characterized in that
the drive gas pressure is used to control the infeed rate of the liquid inhibiting substance.

8. Method in accordance with at least one of the claims 1 to 6,
characterized in that
a regulating valve (2) is used between the supply container (1) and the infeed position of the reaction inhibiting substance for the control of the infeed thereof.

9. Method in accordance with at least one of the claims 1 to 8,
characterized in that
the infeed system ((1,2,3,5); (1,2,3,5,6)) is interrupted in the normal operation of the nuclear reactor by a so-called removable duct section which is first inserted when required.

10. Method in accordance with at least one of the claims 1 to 8,
characterized in that
the infeed line (3) is closed at its end associated with the core region (8) or the sump (12) during normal operation of the nuclear reactor in order to keep the infeed system ((1,2,3,5); (1,2,3,5,6)) ready in the so-called stand-by state.

11. Method in accordance with claims 1 to 10,
characterized in that
the reaction inhibiting means contains an inert gas.

12. Method in accordance with one of the claims 1 to 11,
characterized in that
nitrogen (1) is used as the reaction inhibiting means which is stored ready in liquid form or is made available in liquid form.

13. Method in accordance with one of the claims 1 to 11,
characterized in that
carbon dioxide which is stored in liquid form is used as the reaction inhibiting means.

14. Method in accordance with one of the preceding claims,
characterized in that
mixtures of chemical reaction inhibiting means are used as the reaction inhibiting substance.

15. Method in accordance with at least one of the claims 5 to 7,
characterized in that
the drive gas (4) contains an inert gas.

16. Method in accordance with one of the claims 5 to 15,
characterized in that
gas mixtures are used as the drive gas (4).

17. Method in accordance with claim 1, 2 and 4 to 16,
characterized in that
at least a part of the duct which has hitherto been provided for the so-called venting of the reactor pressure vessel (7) is used as a part of the infeed system.

18. Method in accordance with one of the claims 1, 3, 4 and 17,
characterized in that
at least a part of the system provided for the taking of samples and/or for the infeed of helium gas is used as a part of the system for the infeed of the liquid reaction inhibiting substance.

19. Method in accordance with one of the preceding claims,
characterized in that
an infeed line (3) which is closed in normal operation is so designed that it intentionally fractures or opens under the action of the conditions prevailing during an incident and frees the infeed line.

20. Method in accordance with claim 19,
characterized in that
the internal pressure of the closed infeed system ((1,2,3,5); (1,2,3,5,6)) which is initiated during an incident leads to an intentional failure of the closure of the infeed system and thus to the freeing of a desired infeed cross-section.

21. Method in accordance with one of the claims 19 and 20,
characterized in that
seals in the form of plugs, foils, jackets, burstable disks or the like are used as a closure for the infeed opening during the so-called stand-by state and are removed or destroyed in the case of an incident by the action of temperature and/or pressure.

22. Method in accordance with one of the claims 19 to 21,
characterized in that
at least a part of the infeed line (3) is executed in a material which does not withstand the existing or applied pressure at the temperatures which occur in the case of an incident.

23. Method in accordance with one of the preceding claims,
characterized in that
the pressure drop in the infeed line (3) is used to actuate the isolation and/or regulation valve (2, 5).

24. Method in accordance with one of the preceding claims,
characterized in that
the outflow opening is so arranged and designed that the reaction inhibiting means occurs in its liquid phase distributed in droplets in the coolant.

25. Method in accordance with one of the preceding claims,
characterized in that
the outflow opening for the reaction inhibiting substance is formed as a nozzle, that is to say as an apertured tube nozzle, as a distributor nozzle or as a spray nozzle.

26. Apparatus for minimizing the danger of a chemical reaction of the hydrogen which arises in an incident in the reactor with overheating of the core, in particular for carrying out the method of one of the preceding claims 1 to 25,
characterized by
a container (1) which can be arranged in or introduced into the area of the nuclear reactor for the storage of a chemical reaction inhibiting, vaporizable substance in liquid form and also by duct means (3) and/or at least one valve means (2, 5) for introducing the substance into the region of the fuel rods and/or into the sump.

27. Apparatus in accordance with claim 26,
characterized in that
a means (6) is present which automatically causes the introduction of the chemical reaction inhibiting substance into the core (8) and/or into the sump (12) in the case of an incident.

28. Apparatus in accordance with claim 26 and/or claim 27,
characterized in that
a means is provided for manual connection of the container (1) containing the chemical substance to a line (3) which opens in the core (8) and/or in the sump (12).

29. Apparatus in accordance with one of the preceding claims 26 to 28,
characterized in that
a propellant container (4) is provided which is connected to or is connectable to the container (1) which stores the reaction inhibiting substance in order to press this reaction inhibiting substance into the core region (8) or into the sump (12) in the case of an incident.

30. Apparatus in accordance with one of the preceding claims 26 to 29,
characterized in that
the line (3) which introduces the reaction inhibiting substance (1) into the core region (8) or sump (12) is provided with openings for the distributed introduction of this substance.

31. Apparatus in accordance with one of the preceding claims 26 to 30,
characterized in that
the line (3) for the introduction of the reaction inhibiting substance opens into a component of the reactor which is connected to the reactor pressure vessel at the latest in the case of an incident, for example into a coolant line, into a steam generator, into the pressuriser or into the high pressure infeed system.

32. Apparatus in accordance with claim 26,
characterized in that
a forwarding pump is provided for introduction of the reaction inhibiting substance (1) into the core region (8) or into the sump (12).

## Revendications

1. Procédé pour minimiser les risques d'une réaction chimique de l'hydrogène généré lors d'un accident avec surchauffe du coeur, caractérisé en ce que l'on alimente une substance chimique anti-réaction (1) sous forme liquide dans la région du coeur (8) et/ou dans la région du bassin (12), dans lequel est collecté le réfrigérant sortant, et en ce que la chaleur contenue alors dans la région du coeur et/ou du bassin est utilisée pour vaporiser la substance.

2. Procédé selon la revendication 1, caractérisé en ce que la substance anti-réaction (1) est amenée dans la région des barres combustibles.

3. Procédé selon la revendication 1, caractérisé en ce que la substance anti-réaction (1) est amenée dans la région inondée par le réfrigérant lors de l'accident.

4. Procédé selon l'une au moins des revendications 1 à 3, caractérisé en ce que la substance (1) empêchant la réaction chimique est amenée sous forme liquide via une ou plusieurs conduites (3) dans la région dans laquelle elle doit se vaporiser.

5. Procédé selon l'une au moins des revendications 1 à 4, caractérisé en ce que l'amenée de la substance anti-réaction (1) dans la région désirée s'effectue par application d'une pression de gaz propulseur au système d'alimentation ((1, 2, 3, 5) ; (1, 2, 3, 5, 6)).

6. Procédé selon l'une au moins des revendications 1 à 5, caractérisé en ce que l'on utilise en tant que gaz propulseur (4) en particulier un gaz comprimé non condensé, dont la pression est appliquée à la surface de la substance anti-réaction (1) stockée sous forme liquide.

7. Procédé selon l'une ou l'autre des revendications 5 ou 6, caractérisé en ce que la pression du gaz propulseur est utilisée pour commander le débit d'alimentation de l'agent anti-réaction liquide.

8. Procédé selon l'une au moins des revendications 1 à 6, caractérisé en ce que pour la commande de l'alimentation on utilise une soupape de réglage (2) entre le réservoir (1) et l'emplacement d'alimentation de l'agent anti-réaction.

9. Procédé selon l'une au moins des revendications 1 à 8, caractérisé en ce que pendant le fonctionnement normal de la centrale nucléaire le système d'alimentation ((1, 2, 3, 5) ; (1, 2, 3, 5, 6)) est interrompu par une construction dite "annexe" qui est mise en oeuvre uniquement en cas de besoin.

10. Procédé selon l'une au moins des revendications 1 à 8, caractérisé en ce que pendant le fonctionnement normal de la centrale nucléaire la conduite d'alimentation (3) est refermée à son extrémité orientée vers la région du coeur (8) ou du bassin (12), pour préparer le système d'alimentation ((1, 2, 3, 5) ; (1, 2, 3, 5, 6)) dans l'état dit "stand-by" ou de réserve.

11. Procédé selon l'une quelconque des revendications 1 à 10, caractérisé en ce que l'agent anti-réaction contient un gaz inerte.

12. Procédé selon l'une quelconque des revendications 1 à 11, caractérisé en ce que l'on utilise comme agent anti-réaction de l'azote (1) qui est à disposition ou mis à disposition sous forme liquide.

13. Procédé selon l'une quelconque des revendications 1 à 11, caractérisé en ce que l'on utilise comme agent anti-réaction du dioxyde de carbone stocké sous forme liquide.

14. Procédé selon l'une quelconque des revendications précédentes, caractérisé en ce que l'on utilise comme substance anti-réaction des mélanges d'agents anti-réaction chimiques.

15. Procédé selon l'une au moins des revendications 5 à 7, caractérisé en ce que le gaz propulseur (4) contient un gaz inerte.

16. Procédé selon l'une quelconque des revendications 5 à 15, caractérisé en e que l'on utilise comme gaz propulseur (4) des mélanges de gaz.

17. Procédé selon l'une quelconque des revendications 1, 2 et 4 à 16, caractérisé en ce qu'au moins une partie de la conduite prévue jusqu'ici pour la "mise à l'air" de la cuve de réacteur (7) est utilisée comme partie du système d'alimentation.

18. Procédé selon l'une quelconque des revendications 1, 3, 4 et 17, caractérisé en ce qu'au moins une partie du système prévu pour l'échantillonnage et/ou pour l'alimentation en hélium gazeux est utilisée en tant que partie du système destiné à l'alimentation de la substance anti-réaction liquide.

19. Procédé selon l'une quelconque des revendications précédentes, caractérisé en ce qu'une conduite d'alimentation (3) refermée pendant le fonctionnement normal est conçue de telle sorte qu'elle devient défaillante ou s'ouvre intentionnellement lors de l'effet des conditions de l'accident, et libère l'alimentation.

20. Procédé selon la revendication 19, caractérisé en ce que la pression intérieure du système d'alimentation fermé ((1, 2, 3, 5) ; (1, 2, 3, 5, 6)), qui est établie lors d'un accident, mène à une défaillance intentionnelle de la fermeture du système d'alimentation et ainsi à la libération d'une section d'alimentation désirée.

21. Procédé selon l'une ou l'autre des revendications 19 et 20, caractérisé en ce que l'on utilise en tant que fermeture de l'ouverture d'alimentation pendant d'état dit "stand-by" ou de réserve des éléments d'étanchement sous forme de bouchons, de films, d'enveloppes, de plaques d'éclatement, ou similaires qui sont enlevés ou détruits lors d'un accident par l'effet d'une température et/ou d'une pression.

22. Procédé selon l'une quelconque des revendications 19 à 21, caractérisé en ce qu'au moins une partie de la conduite d'alimentation (3) est réalisée en un matériau qui ne résiste pas à la pression existante ou appliquée sous les températures apparaissant en cas d'accident.

23. Procédé selon l'une quelconque des revendications précédentes, caractérisé en ce que la chute de pression dans la conduite d'alimentation (3) est utilisée pour actionner la soupape d'obturation et/ou de réglage (2, 5).

24. Procédé selon l'une quelconque des revendications précédentes, caractérisé en ce que l'ouverture de sortie est agencée ou réalisée de telle sorte que l'agent anti-réaction apparaît dans sa phase liquide de façon répartie en gouttes dans le réfrigérant.

25. Procédé selon l'une quelconque des revendications précédentes, caractérisé en ce que l'ouverture de sortie pour la substance anti-réaction est réalisée sous forme d'une buse, c'est-à-dire sous forme d'une buse à tube perforé, de répartition ou de pulvérisation.

26. Dispositif pour minimiser les risques d'une réaction chimique de l'hydrogène généré lors d'un accident avec surchauffe du coeur dans le réacteur, en particulier pour mettre en oeuvre le procédé selon l'une quelconque des revendications précédentes 1 à 25, caractérisé par un récipient (1) agencé ou mis en place dans une région du réacteur nucléaire pour stocker une substance chimique anti-réaction vaporisable sous forme liquide, ainsi que par des ensembles de conduite (3) et/ou par au moins un dispositif à soupape (2, 5) pour introduire la substance dans la région des barres combustibles et/ou dans le bassin.

27. Dispositif selon la revendication 26, caractérisé en ce qu'il est prévu un dispositif (6) qui provoque automatiquement l'introduction de la substance chimique anti-réaction (1) dans le coeur (8) et/ou dans le bassin (12) lors d'un accident.

28. Dispositif selon l'une ou l'autre des revendications 26 et 27, caractérisé en ce qu'il est prévu un dispositif pour le raccordement manuel du récipient (1) contenant la substance chimique à une conduite (3) débouchant dans le coeur (8) et/ou dans le bassin (12).

29. Dispositif selon l'une quelconque des revendications 26 à 28, caractérisé en ce qu'il est prévu un récipient d'agent propulseur (4) qui est raccordé ou peut être raccordé au récipient (1) contenant la substance anti-réaction, pour forcer cette substance dans la région du coeur (8) ou du bassin (12) en cas d'accident.

30. Dispositif selon l'une quelconque des revendications 26 à 29, caractérisé en ce que la conduite (3) amenant la substance anti-réaction (1) dans la région du coeur (8) ou dans le bassin (12) est pourvue d'ouvertures pour introduire cette substance de manière répartie.

31. Dispositif selon l'une quelconque des revendications 26 à 30, caractérisé en ce que la conduite (3) pour introduire la substance anti-réaction (1) débouche dans un composant du réacteur, qui est relié au plus tard lors d'un accident à la cuve du réacteur, par exemple dans une conduite de réfrigérant, dans un générateur de vapeur, dans l'accumulateur de pression, ou dans le système d'alimentation à haute pression.

32. Dispositif selon la revendication 26, caractérisé en ce qu'il est prévu une pompe d'alimentation pour amener la substance anti-réaction (1) dans la région du coeur (8) ou dans le bassin (12).
